(19) **Europäisches Patentamt**
**European Patent Office**
**Office européen des brevets**

(11) **EP 1 975 086 A2**

(12) **EUROPEAN PATENT APPLICATION**

(43) Date of publication:
**01.10.2008 Bulletin 2008/40**

(51) Int Cl.:
*B65D 83/14* (2006.01)    *A23G 9/20* (2006.01)
*A23G 9/22* (2006.01)    *A23G 9/28* (2006.01)
*B65B 31/00* (2006.01)

(21) Application number: **08158955.8**

(22) Date of filing: **16.02.2005**

(84) Designated Contracting States:
**AT BE BG CH CY CZ DE DK EE ES FI FR GB GR HU IE IS IT LI LT LU MC NL PL PT RO SE SI SK TR**

(30) Priority: **03.03.2004 GB 0404717**

(62) Document number(s) of the earlier application(s) in accordance with Art. 76 EPC:
**05715364.5 / 1 720 778**

(71) Applicants:
• **Unilever PLC**
**London**
**Greater London EC4P 4BQ (GB)**
Designated Contracting States:
**AT BE BG CH CZ DE DK EE ES FI FR GR HU IS IT LI LT LU MC NL PL PT RO SE SI SK TR**
• **Unilever N.V.**
**3013 AL Rotterdam (NL)**
Designated Contracting States:
**CY GB IE**

(72) Inventors:
• **Campbell, Iain, James**
**Bedford, Bedfordshire MK44 1LQ (GB)**
• **Darling, Donald, Frank**
**Stradbroke, Suffolk IP21 5JP (GB)**
• **Feenstra, Robert, Theodoor**
**3133 AT Vlaardingen (NL)**
• **Hunter, Jeffrey**
**00142 Rome (IT)**
• **Luck, Richard, Henry**
**Bedford, Bedfordshire MK44 1LQ (GB)**

(74) Representative: **Hugot, Alain**
**Unilever Patent Group**
**Colworth House**
**Sharnbrook**
**Bedford, MK44 1LQ (GB)**

Remarks:
This application was filed on 25-06-2008 as a divisional application to the application mentioned under INID code 62.

(54) **Frozen aerated product in a container and a method for manufacturing such**

(57)    A frozen aerated product in a container, the container having a wall delimiting a cavity and having an opening, the cavity containing a bag, the opening being closed by a valve having a product inlet and a product outlet, the bag containing the product inlet, the cavity containing a propellant, the frozen aerated product being contained within the bag and gastightly separated from the propellant by the bag, there being an annular hermetic seal between the bag and the wall; characterised in that the bag is resiliently inflatable and the frozen aerated product is under a gauge pressure of between 4 and 18 bar.

EP 1 975 086 A2

**Description**

Field of the Invention

The present invention relates to a frozen aerated product in a container and a method for manufacturing such. The present invention more particularly relates to products commonly referred to as aerosols.

Background to the Invention

The availability of aerosol creams and toppings in a convenient and affordable form has led to their everyday use by consumers. Ice cream and similar frozen aerated products are often used as alternatives to whipped creams and toppings but currently there are no commercially available aerosol forms of such products. In addition, there has long been a need to provide soft-serve ice cream, a popular out-of-home dessert, in a form where it may be dispensed at home directly on removal from the freezer.

A problematic feature of frozen aerated products is their high viscosity, especially at the temperature of a domestic freezer. Owing to such high viscosity, it is not possible to ensure that product will be adjacent to the inlet of an aerosol valve merely by inverting the can during dispensing.

Compartmentalised aerosol systems have been developed for dispensing highly viscous products. Such systems include the so-called bag-in-can aerosols, bag-on-valve aerosols and piston-type aerosols. These systems allow for separation of the product and the propellant into two compartments, the compartments being arranged such that the product is kept pressed against the valve inlet by the pressure of the propellant acting via a moveable wall (i.e. a piston or bag).

It is notoriously difficult to control the collapse of the bag in bag-in-can and bag-on-valve systems such that the bag does not choke during dispensing. Owing to the problem with choking, it is common practice to provide such systems with a dip tube which ensure that the bottom of the bag is always in fluid communication with the valve even if the bag chokes. Unfortunately, however, for extremely viscous products such as ice cream at the temperature of a domestic deep freeze (-18°C to -22°C), dip tubes do not provide a satisfactory solution to the choking problem. This is because the requirement for the product to flow through a long, narrow tube severely reduces the flow rate of the product.

Therefore, as recognised in international application WO 03/033355, piston-type systems are preferred over bag-in-can systems for dispensing extremely viscous products such as frozen products. In this type of system the moveable wall is a rigid or semi-rigid piston. The pressure of the propellant acts on the piston during dispensing, urging the piston and therefore the product towards the valve inlet. Thus there are no problems with choking with this system and no requirement for dip tubes. Unfortunately, however, the piston-type aerosols also have several drawbacks. Firstly, they are expensive to manufacture, requiring the piston to be inserted prior to finishing of the can body. Secondly, the system only works with containers that have a constant cross-section. Thirdly the system requires a precise fit of the piston with the container wall over the whole range of pressures encountered during the lifetime of a product. Therefore such systems are not compatible with containers made from materials such as plastic, which undergo appreciable changes in dimensions as the pressure is changed.

US patent 5,301,838 describes a compartmentalised container for use with relatively viscous materials such as ice cream wherein the container consists of a relatively rigid outer layer and a separable liner. A positive pressure of around 20 psi (around 1.4 bar) is applied through a bottom opening in the outer layer to delaminate the inner layer, which forms a flexible bag, and dispense the product. Suitable materials for constituting the inner layer (and therefore the bag) are listed as thermoplastic resins such as polyethylene teraphthalate (PET), polypropylene, polyethylene, polyvinyl chloride, polycarbonate and mixtures thereof. It is stated that the flexible bag undergoes full collapsing during dispensing while the extreme upper part of the inner most layer remains tightly joined to the outer layers.

Apart from the fact that such technology absolutely requires the use of a laminated container, bags with an external surface area the same as the internal surface area of the container wall and low pressures, we have found that use of bags made from non-resilient materials such as polyethylene for dispensing extremely viscous products such as frozen aerated products at a temperature of a domestic deep freeze, results in choking of the bag and incomplete dispensing of the product. This is so even if the bag is tightly joined to the container wall in the vicinity of the valve.

There is thus a need for an inexpensive and efficient compartmentalised aerosol system, compatible with non-cylindrical container walls and capable of dispensing frozen aerated products at the temperature of a domestic deep freeze.

It has been found that it is possible to achieve such a goal by arranging the container wall, valve and bag in a specific way and by using a bag with specific properties.

<u>Tests and Definitions</u>

**Pressure**

In the description 'barg' means 'bar gauge' and the pressure was measured at a temperature of -10°C.

**Plastic Material**

A plastic material is defined as a material substantially comprised of one or more organic polymers. Preferably the plastic material comprises at least 80% w/w of one or more organic polymers, more preferably at least 95%. Preferably also the plastic material has a bulk thermal conductivity of less than 5 W $m^{-1}$ $K^{-1}$ at a temperature of 273 K, more preferably less than 1 W $m^{-1}$ $K^{-1}$.

**Dispensing Residue**

The dispensing residue of a container equipped with a valve and containing a frozen aerated product having a temperature of - 18°C is defined as the ratio of the mass of frozen aerated product remaining in the container following dispensing, to the total volume (brim-fill capacity) of the container wall. The mass of frozen aerated product remaining in the container following dispensing being defined as that mass which is not dispensed by opening the valve to its full extent up until such time as less than 1 g of product flows through the valve in a 10 s period.

The dispensing residue is measured as follows.

Three specimens of a frozen aerated product in a container equipped with a valve and actuator are tempered at -18°C for 24 hours.

For testing, a container is removed from the -18°C store and the valve immediately actuated and held open to its fullest extent. The product dispensed during this actuation is collected on a digital balance. The digital balance is connected to a data collection computer which records the mass dispensed every 0.5 s. Data collection is stopped when the mass dispensed increases less than 1 g in a 10 s period. The mass of frozen aerated product remaining in the container is then calculated by subtracting the mass dispensed up until the end of the data collection period from the known fill weight (or declared product weight). The dispensing residue of the specimen is then calculated by dividing the mass of frozen aerated product remaining in the container by the brim-fill capacity of the container wall. The process is then repeated for the other two specimens. The dispensing residue of the container is taken to be the mean of the three specimens and the uncertainties quoted are the corresponding 95% confidence intervals.

**Average molecular weight**

For the purposes of this patent, the average molecular weight for a mixture of freezing point depressants (fdps) is defined by the number average molecular weight $<M>_n$ (equation1). Where $w_i$ is the mass of species i, $M_i$ is the molar mass of species i and $N_i$ is the number of moles of species i of molar mass $M_i$.

$$<M>_n = \frac{\sum w_i}{\sum (w_i/M_i)} = \frac{\sum N_i M_i}{\sum N_i} \qquad \text{Equation 1}$$

**Freezing point depressants**

Freezing point depressants (fpds) as defined in this invention consist in:

- Monosaccharides and disaccharides.
- Oligosaccharides containing from 3 to ten monosaccharide units joined in glycosidic linkage.
- Corn syrups with a dextrose equivalent (DE) of greater than 20 preferably > 40 and more preferably > 60. Corn syrups are complex multi-component sugar mixtures and the dextrose equivalent is a common industrial means of classification. Since they are complex mixtures their number average molecular weight <M>n can be calculated from the equation below. (Journal of Food Engineering, 33 (1997) 221-226).

$$DE = \underline{18016}$$

$$\langle M \rangle_n$$

- Erythritol, arabitol, glycerol, xylitol, sorbitol, mannitol, lactitol and malitol.

**Definition of overrun.**

Overrun is defined by the following equation

$$OR = \frac{\text{volume of frozen aerated product} - \text{volume of premix at ambient temp}}{\text{volume of premix at ambient temp}} \times 100$$

It is measured at atmospheric pressure.

**Soluble Gas**

A soluble gas is defined as a substance that is gaseous at a pressure of 1 atm and a temperature of 273 K and has a Henry's constant in water of less than 1 kbar at a partial pressure of 1 atm and a temperature of 278 K.

Summary of the Invention

It is a first object of the present invention to provide a frozen aerated product in a container, the container having a wall delimiting a cavity and having an opening, the cavity containing a bag, the opening being closed by a valve having a product inlet and a product outlet, the bag containing the product inlet, the cavity containing a propellant, the frozen aerated product being contained within the bag and gastightly separated from the propellant by the bag, there being an annular hermetic seal between the bag and the wall; characterised in that the bag is resiliently inflatable and the frozen aerated product is under a gauge pressure of between 4 and 18 bar.

It has been found that such a container is inexpensive as there is no requirement for any special steps (e.g. such as insertion of a piston or bag before finishing of the container wall) while manufacturing the container wall. In addition, the use of high pressures and a resiliently inflatable bag which is hermetically sealed to the container wall allows for almost complete dispensing of frozen aerated products even whilst in their extremely viscous state at the temperature of a domestic deep freeze. Preferably the bag is attached to the valve as this aids in preventing the bag from being pushed into the product inlet of the valve.

Preferably, the bag comprises an elastomeric membrane. We have found that use of a resiliently inflatable bag ensures that as the product is dispensed, the bag, rather than collapsing, contracts towards its natural shape and as such the formation of pleats and isolated pockets within the bag (i.e. choking) is avoided. The use of an elastomeric membrane, such as a rubber balloon, provides such a mechanism. In order to ensure that the elstomeric membrane is resilient at the temperatures of a domestic deep freeze, it is preferable that the membrane comprises an elastomer with a glass transition temperature below -40°C, more preferably below -50°C. Preferably the external surface area of the bag in its natural (unstressed) state is less than 50% of the surface area of the wall cavity of the container, more preferably less than 20%. Preferably also the natural shape of the bag allows easy manual insertion of the bag through the opening in the container wall.

Container walls made by blow moulding are considerably cheaper and more efficient to manufacture than those that those manufactured by other techniques. In order to provide blow-moulded containers with sufficient strength to safely hold a gauge pressure of 4 to 18 bar it is necessary that the blow moulded container wall consists of a single piece. The present invention allows for the use of blow-moulded walls as it provides for embodiments in which the wall consists of a single piece. In addition, we have found that shaping the wall, for example to include a waisted region, makes the container easy to manipulate even in situations where the outer surface of the container has become slippery owing to condensation of atmospheric water and resultant frosting.

In another preferred embodiment the wall has a single opening. Containers which have a second opening for introducing propellant are expensive. This is because the second opening is required to be precisely engineered and fitted with a special plug in order to prevent leaking of the propellant during use.

Preferably, the annular hermetic seal is coaxial with the opening. Preferably also, the annular hermetic seal covers a region of the wall extending from the opening for an area of between 10% and 50% of the whole surface area of the cavity. Sealing the bag to the wall in such a manner is found to prevent the bag from being pushed into the valve inlet and blocking the valve, while allowing maximum contraction of the bag and thus low residue of undispensed product.

In a preferred embodiment the hermetic seal comprises an adhesive. Use of an adhesive provides a versatile and inexpensive means for forming a seal and overcomes the need in prior art systems to mechanically clamp or crimp a bag to a container wall. The adhesive should be capable of hardening to form a cohesively strong solid following application. This hardening process is known as curing and can occur, for example, by chemical reaction (e.g. as brought about by UV irradiation), loss of solvent or water, or by cooling. Preferably the adhesive is arranged such that it does not contact the frozen aerated product. If contact cannot be avoided then it is preferred that the adhesive is a food-safe material.

In another preferred embodiment the wall is of plastic material. Plastic material is particularly convenient for blow moulding. In addition we have found that the thermal conductivity of plastic, while not as low as that of insulating labels known in the art, nevertheless ensures that the container is suitable for immediate handling by a consumer once taken out of a freezer compartment while not generating in the fingers of the consumer too cold a feeling, without the use of such a label. Preferably, the wall comprises a plastic bottle, more preferably a PET bottle.

Preferably the filled container has a dispensing residue of less than 0.1 g ml$^{-1}$, more preferably less than 0.05 g ml$^{-1}$. In many states, there is a regulatory limit on the size of aerosol containers. It has been found, however, that by ensuring that the dispensing residue is kept below the limits specified above, a frozen aerated product in a container within the prescribed legal size may be provided that dispenses a satisfactory amount of product resulting in good value for money and low wastage for the consumer.

Preferably, the frozen aerated product contains freezing point depressants in an amount between 20% and 40% w/w, preferably above 25%, and between 0% and 15% fat, preferably between 2% and 12%, the freezing point depressants having a number average molecular weight $\langle M \rangle_n$ following the following condition:

$$\langle M \rangle_n =< (330 - 8 * FAT) \; g \; mol^{-1}$$

wherein FAT is the fat level in percent by weight of the product. Frozen aerated products with such a composition are found to be soft and extrudable even at the temperature of a domestic deep freezer.

In yet another preferred embodiment, the frozen aerated product contains a soluble gas in an amount between 0.1% w/w and 5% w/w, more preferably between 0.3% and 2%. Preferably also, the soluble gas is nitrous oxide. Use of soluble gases for generating overrun is well known in food aerosol systems. We have found that such a technology may also be used in the present invention. Preferably the soluble gas is mixed with the frozen product during aeration and freezing. Preferably also the frozen aerated product contains a mixture of air and a soluble gas.

It is a second object of the present invention to provide a process for manufacturing a container comprising the steps of:

- providing a bag, a valve and a wall delimiting a cavity and having an opening;
- introducing a propellant into the cavity up to a gauge pressure of 1 to 10 bar;
- whilst maintaining the pressure in the cavity, inserting the bag into the cavity and attaching the valve to the opening to form a gastight container;
- forming an annular hermetic seal between the bag and the wall.

This process has the advantage that no lamination of the container is required and containers can be used that do not have special openings for the introduction of propellant.

In a preferred embodiment, prior to inserting the bag into the cavity an adhesive is applied to one or both of an inner surface of the cavity and an outer surface of the bag; and the hermetic seal is formed by making a contact between the inner surface of the cavity and the outer surface of the bag, the contact being made via the adhesive prior to curing of the adhesive and being maintained until the adhesive is cured.

In another preferred embodiment, the process further comprises the step of introducing a viscous product into the bag until a gauge pressure of between 4 and 18 bar is reached. Preferably, the hermetic seal is effected by inflation of the bag owing to introduction of the viscous product into the bag. The inclusion of such a process step is advantageous as it decreases the number of process stations required on a filling line especially where the viscous product is the product to be dispensed from the container. Thus, in a particularly preferred embodiment the viscous product is a frozen aerated product.

It is a third object of the present invention to provide a frozen aerated product in a container, the container having at least two compartments (A) and (B), compartment (A) containing a propellant, compartment (B) containing the frozen aerated product and compartment (B) being provided with a valve; characterised in that the compartments are gastightly separated from each other by the membrane of a bag and the container has a dispensing residue of less than 0.1 g ml$^{-1}$, preferably less than 0.05 g ml$^{-1}$. Such a system is advantageous as, unlike the piston systems suggested in the art, it provides for aerosol formats of frozen aerated products that use containers made by blow moulding. Such formats are less expensive, easier to handle and produce less waste than existing formats. In addition, by ensuring that the dispensing residue is kept below the limits specified above, a frozen aerated product in a container within the prescribed legal size may be provided that dispenses a satisfactory amount of product resulting in good value for money and low wastage for the consumer.

Brief Description of the Drawings

The present invention will now be described by way of example with reference to the accompanying drawings in which:

Figure 1 is a sectioned view of a container according to an embodiment of the present invention;

Figure 2 is a sectioned view of a container according to an alternative embodiment of the present invention;

Figures 3a to 3c show the various steps of a process according to an embodiment of the present invention.

Detailed Description of the Invention

The present invention will be further described with reference to the following preferred embodiments and examples.

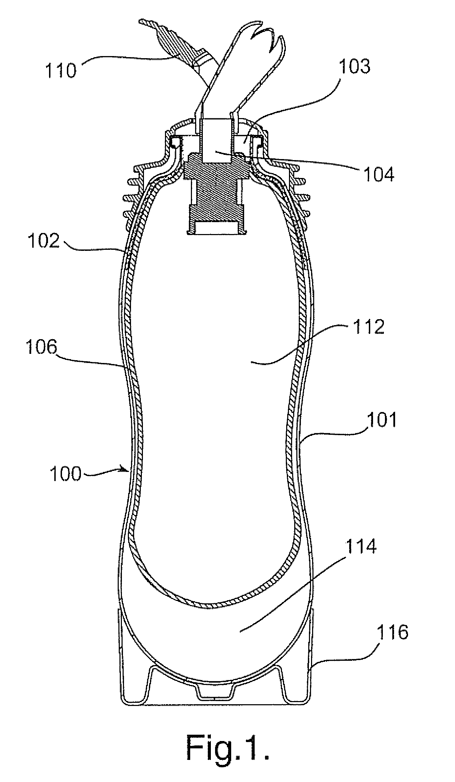

Figure 1 illustrates one embodiment of the type of container that may be used for dispensing a frozen aerated product according to the present invention. The container comprises a bottle (100) fitted with a valve (104) and an actuating member (110). The bottle (100) is mounted in a base cup (116) to allow the container to stand in an upright position. A bag (106), for example a rubber balloon, separates the can into two compartments, the inner compartment (112) containing the frozen aerated product and the outer compartment containing compressed air or another form of gaseous or liquefied propellant. An annular hermetic seal (102) seals the balloon (106) to the inner surface of the bottle (100).

The bottle (100) consists of a wall (101) delimiting a cavity (114) and a single opening (103). The wall (101) has a shouldered top end in which is located the opening (103) and a rounded bottom end which engages with the base cup (116). Extending between the two ends, the wall (101) has a waisted region wherein the diameter of the bottle (101) progressively narrows and then expands.

The valve (104), which is preferably a high-discharge valve, is mounted in the opening (103) by a valve cup which is crimped around the mouth of the opening (103). The balloon (106) surrounds the valve (104) and has a bead that extends into the crimp area of the valve cup such that the bead serves the function of a conventional cup gasket in forming a seal between the valve (104) and the wall (101). Thus the bag (106) is effectively attached to the valve (104) by means of the crimp but embodiments are also envisaged wherein the balloon is attached to the valve by alternative means, for example by an adhesive bond between the bag (106) and the housing of the valve (104).

The balloon (106) is shown inflated with product and as such is in a distended state. An hermetic seal (102), for example a layer of adhesive, extends from the opening (103) and fills an annular cavity between the outer surface of the balloon (106) and the inner surface of the shouldered top end of the wall (101).

In use, the user applies a force to the actuating member (110) which opens the valve (104). The pressure of the propellant acting on the balloon (106) causes the product in the balloon to flow into an inlet in the valve (104) and out through an outlet in the valve which is in fluid communication with a nozzle in the actuator (110). As product is dispensed from the container, the membrane of the distended balloon (106) contracts around the remaining product. As the annular seal (102) is hermetic, the pressure of the propellant is prevented from acting on the balloon (106) in a radial direction in the vicinity of the valve (104). Thus the portion of balloon (106) sealed to the shouldered top end of the wall (101) is prevented from being pushed into the product inlet of the valve (104) and blocking the flow of product. If a layer of adhesive forms the hermetic seal (102) then it is found that as the final portion of product is dispensed, the balloon (106) may peel away from the seal (102). In such a situation, however, the balloon is only pushed into the product inlet of the valve (104) once the majority of product has been dispensed. It is preferred, however, that the adhesive forms a strong bond such that when the container is almost emptied the balloon (106) remains attached to the wall and is not drawn into the valve.

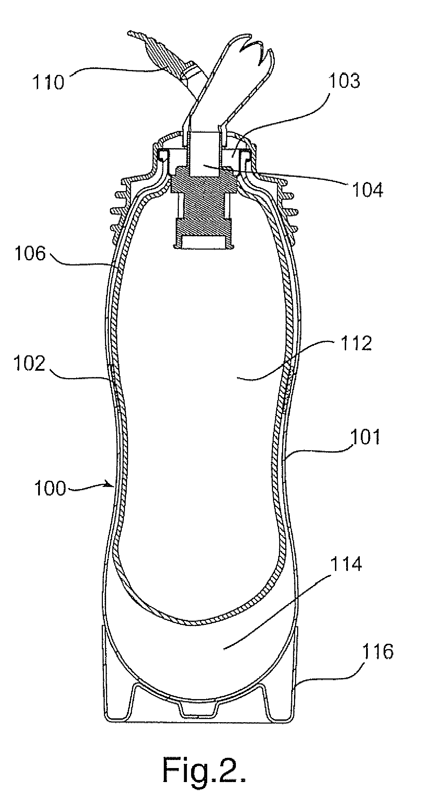

An alternative embodiment of the type of container that may be used for dispensing a frozen aerated product according to the present invention is illustrated in Figure 2. In this case, the hermetic seal (102), for example a layer of adhesive, fills a short portion of the annular cavity between the outer surface of the balloon (106) and the inner surface of the waisted region of the wall (101). Such an arrangement has been found capable of preventing the balloon (106) from being pushed into the valve (104) during dispensing, especially when the balloon (106) is attached to the valve (104) in the crimped area of the valve cup (as described above). It is essential that the seal (102) is both annular and hermetic as, if not then propellant from the region of the cavity (114) below the seal (102) is in fluid communication with the region of the cavity (114) above the seal (102) and the balloon (106) is found to be pushed into the valve (104) during dispensing.

The containers illustrated in Figures 1 and 2 are particularly advantageous for use in dispensing a frozen aerated product having the following composition:

Freezing point depressants in an amount of between 20 % and 40 % w/w, preferably above 25%, and between 0% and 15% fat, preferably between 2% and 12%, the freezing point depressants having a number average molecular weight $\langle M \rangle_n$ following the following condition:

$$\langle M \rangle_n \ =< \ -8 \ FAT \ +330$$

wherein FAT is the fat level in percent by weight of the product.

The freezing point depressants may be made at least a level of 98% (w/w) of mono, di and oligosaccharides . In a preferred embodiment, the frozen aerated product contains less than 0.5% (w/w) glycerol, preferably less than 0.25% (w/w), even more preferably less than 0.1% (w/w) .

Preferably, the frozen aerated product has an overrun of less than 150%, more preferably less than 140%, and preferably more than 80%. In an alternative preferred embodiment, the frozen aerated product has an overrun of more than 150%, and preferably more than 170%.

The average molecular weight is preferably below 250, more preferably below 230.

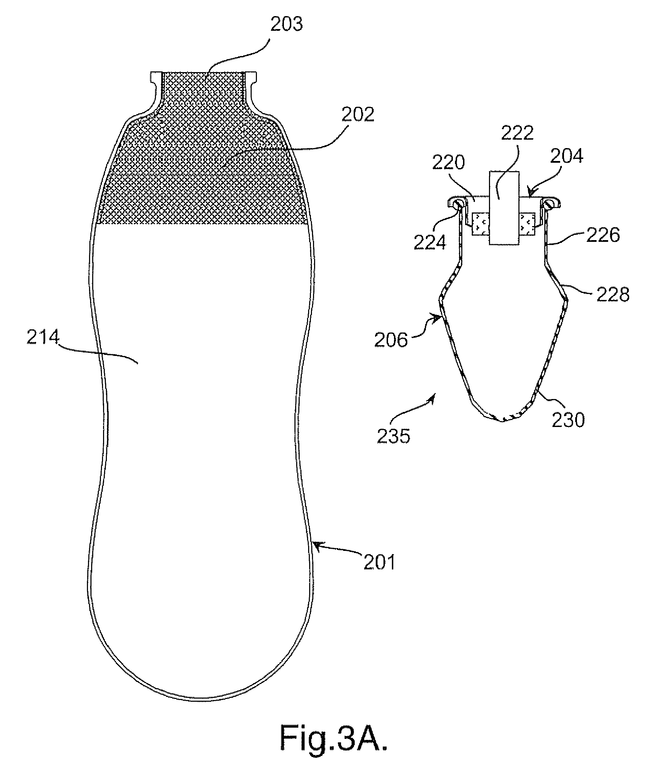

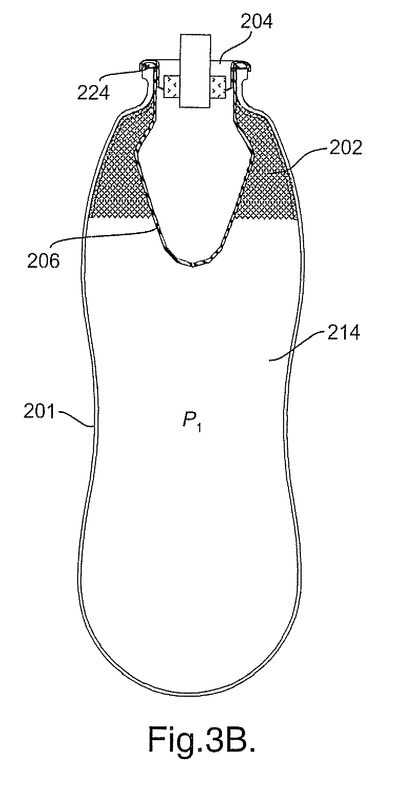

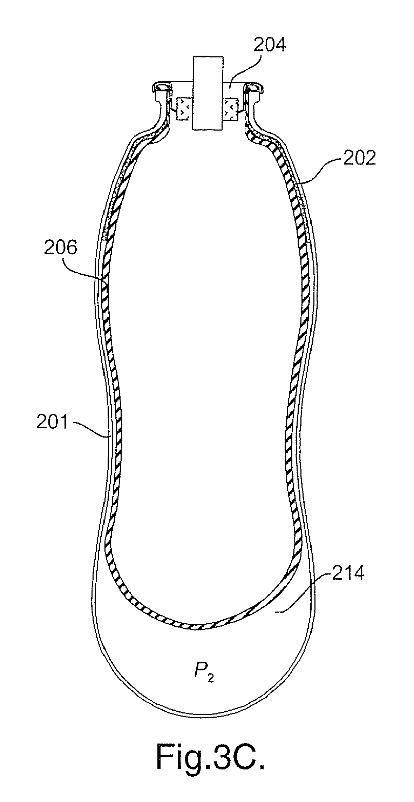

A frozen aerated product in a container according to the present invention may be manufactured in any convenient manner. A preferred method of manufacture is illustrated in Figure 3.

At the start of the manufacturing process, a container wall (201), a bag (for example a rubber balloon) (206) and a valve (204) are provided as shown in Figure 3a. The container wall (201) delimits a cavity (214) and has an opening (203). A continuous layer of adhesive (202) is applied to the inner surface of the cavity (214). The layer of adhesive (202) forms an annulus coaxial with the opening (203) and extending from the opening (203) for approximately 20% of the total surface area of the cavity. The valve (204) comprises a valve cup (220) and a valve stem (222). The balloon (206) comprises a circular opening around which extends a bead (224), a tubular neck portion (226) extending downward from the bead (224) a conical shoulder portion (228) extending downward from the neck (226) and increasing in diameter to a substantially dome-shaped portion (230). The bead (224) fits snugly under the outer rim of the valve cup (220) such that the balloon (206) does not detach from the valve (204) under the force of its own weight and a balloon-valve assembly (235) is formed.

The next step in the manufacturing process is to assemble the empty container as shown in Figure 3b. This is accomplished by positioning the balloon-valve assembly (235) over the opening (203) in the wall (201) and introducing propellant into the cavity (214) around the sides of the balloon-valve assembly (235). The pressure of propellant in the cavity (214) is maintained at a pressure $P_1$ whilst the balloon-valve assembly is crimped around the opening (203). During this crimping process the bead (224) of the balloon (206) is squashed within the crimped region of the valve cup (220) thus forming a seal between the valve (204) and the container wall (201) and effectively attaching the balloon (206) to the valve (204). The valve (204) is then actuated for a short time to evacuate any air within the balloon (206). It should be recognised that as the balloon is flexible then the shape of the balloon (206) at this stage will not be as shown in Figure 3b as the balloon (206) will be pressed against the valve (204) by the pressure of the propellant in the cavity (214).

The final step of the process involves introducing frozen aerated product into the balloon (206) through the valve (204) up to where a pressure $P_2$ is reached, with $P_2 > P_1$. During this filling the balloon (206) is inflated with product and assumes a distended state as shown in Figure 3c. As a result, the outer surface of the balloon (206) contacts the adhesive (202) on the inner surface of the container wall (201) and a bond is formed. The container is then stored until the adhesive (202) has cured, forming a hermetic seal between the balloon (206) and the wall (201). Although the seal in this case is formed using an adhesive, it will be appreciated that it may be formed by other means, for example mechanical means, that provide a gas-tight join between the bag (206) and the wall (201).

Example 1

**Formulation**

| Skimmed Milk Powder | 10.00 |
| Coconut Oil | 05.00 |
| Dextrose | 16.70 |
| Low Fructose Corn syrup | 10.30 |
| Sucrose | 01.20 |
| Monoglyceride Emulsifier | 00.70 |
| Acetic Acid Esters | 00.40 |
| LBG | 00.20 |
| Vanilla Flavour | 00.16 |
| Water | 55.34 |
| ( Freezing Point Depressant Solids | 30.9 ) |
| ( $<M>_n$ (g mol$^{-1}$) | 223 ) |

All concentrations are % (w/w).
Specialist materials were as follows:

- LBG was Viscogum FA supplied by Degussa Texturant Systems, France.

- Monoglyceride emulsifier was ADMUL MG 40-04 supplied by Quest International, Bromborough Port, UK.

- Acetic acid ester of monoglyceride was Grinsted ACETEM 50-00 A supplied by Danisco Cultor, Wellingborough, UK.

- Low Fructose Corn Syrup was C*TruSweet 017Y4, had a moisture level of 22%, a DE of 63 and was supplied by Cerester, Manchester, UK.

**Packaging**

Extrusion blow-moulded PET (Laserplus grade, Dupont) bottles were provided by Polimoon Fibrenyle, Ellough, Beccles, UK. These bottles had a brim-fill capacity of 500 ml and a burst gauge pressure of 18 bar. The bottles had a waisted shape similar to that of the container wall (201) shown in Figure 3a.

The valves used were custom made high-discharge valves with a 10 mm I.D. stem (Precision Valve, Peterborough, UK).

Natural rubber balloons were obtained from P. H. Douglas Co Ltd, Dursley, Gloucestershire, UK. The balloons had a natural shape similar to the balloon (206) shown in Figure 3a and had a total length of 40 mm, a neck (226) length of 16 mm, a maximum diameter at the conical shoulder (228) of 35 mm, a membrane thickness of 0.75 mm in the neck region (226) and 1 mm in the conical (228) and dome-shaped (230) regions. The bead (224) had a thickness of 2.25 mm. The rubber had a glass transition temperature of around -70°C.

The adhesive used was Evo-Stick™ Safe 80 which is a rubber latex based contact adhesive (Bostik Findley Limited, Stafford, UK) .

**Process**

*Mixing*

All ingredients except from the fat and emulsifiers were combined in an agitated heated mix tank. The fat was melted and emulsifiers added to the liquid fat prior to pouring into the mix tank. Once all of the ingredients were blended together, the mix was subjected to high shear mixing at a temperature of 65°C for 2 minutes.

*Homogenisation and Pasteurisation*

The mix was passed through a homogeniser at 150 bar and 70°C and then subjected to pasteurisation at 83°C for 20 s before being rapidly cooled to 4°C by passing through a plate heat exchanger.

*Ageing*

The mix was held at 4°C for 5 hours in an agitated tank prior to freezing.

*Gassing*

Before attaching the valves or inserting the balloons, a layer of adhesive was applied to the whole inner surface of the shoulder portion of the bottles as shown in Figure 3a. Each valve was then inserted into the neck of a balloon such that the bead (224) of the balloon fitted snugly under the rim of the valve cup (220). An under-cup gasser crimper (Pamasol Willi Mader AG Undercup Crimper 02002-500, supplied by DH Industries, Laindon, Essex, UK) was then used to crimp the balloon-valve assembly onto the bottles while simultaneously introducing compressed air into the body at a gauge pressure $P_1$ of 2.2 bar.

*Freezing*

The formulation was frozen using a typical ice cream freezer (scraped surface heat exchanger, SSHE) operating with an open dasher (series 80), a mix flow rate of 150 1 / hour, an extrusion temperature of -9°C. The input airline was modified such that it was simultaneously fed by compressed air and $N_2O$, both at a gauge pressure of 6 bar. With the $N_2O$ supply turned off, the compressed air flow rate was adjusted up until the ice cream exiting the freezer had an overrun of 50%. The $N_2O$ supply was then turned on and the flow rate of $N_2O$ gradually increased up until a steady overrun of 140% was achieved.

*Filling*

From the freezer, the ice cream was fed directly into an aerosol-dosing chamber (DH Industries, Laindon, Essex, UK) at a line gauge pressure of 10.5 bar. When full, the dosing chamber was then pressurised to 60 barg (by means of an intensifier) and a known volume of ice cream injected through the valve into the balloon. The volume injected was around 350 ml at 10.5 barg, giving a final gauge pressure $P_2$ in the container of around 8 bar at -10°C and a fill weight of 329 g. Each can was then fitted with an actuator and transferred to a -25°C store for hardening, storage and curing of the adhesive.

*Storage*

Cans were stored at -18°C for 24 hours prior to testing and use.

**Final Product**

The dispensing residue of the container was 0.039 $\pm$ 0.004 g ml$^{-1}$. The container was found to be comfortable to handle when taken directly from a domestic deep-freeze without the need for insulating labels. In addition, owing to the waisted shape of the bottles, the containers were easy to grip.

**Claims**

1. A frozen aerated product in a container, the container having a wall delimiting a cavity and having an opening, the cavity containing a bag, the opening being closed by a valve having a product inlet and a product outlet, the bag containing the product inlet, the cavity containing a propellant, the frozen aerated product being contained within the bag and gastightly separated from the propellant by the bag, there being an annular hermetic seal between the bag and the wall;
   **characterised in that** the bag is resiliently inflatable and the frozen aerated product is under a gauge pressure of between 4 and 18 bar.

2. A frozen aerated product in a container according to claim 1 wherein the bag is attached to the valve.

3. A frozen aerated product in a container according to claim 1 or claim 2 wherein the bag comprises an elastomeric membrane.

4. A frozen aerated product in a container according to any of claims 1 to 3 wherein the frozen aerated product has a temperature of less than -10°C, preferably between -15°C and -25°C.

5. A frozen aerated product in a container according to any of claims 1 to 4 wherein the wall consists of a single piece.

6. A frozen aerated product in a container according to any of claims 1 to 5 wherein the wall has a single opening.

7. A frozen aerated product in a container according to any of claims 1 to 6 wherein the annular hermetic seal is coaxial with the opening.

8. A frozen aerated product in a container according to any of claims 1 to 7 wherein the annular hermetic seal covers a region of the wall extending from the opening for an area of between 10% and 50% of the whole surface area of the cavity.

9. A frozen aerated product in a container according to any of claims 1 to 8 wherein the hermetic seal comprises an adhesive.

10. A frozen aerated product in a container according to any of claims 1 to 9 wherein the wall is of plastic material.

11. A frozen aerated product in a container according to any of claims 1 to 10 wherein the container has a dispensing residue of less than 0.1 g ml$^{-1}$, preferably less than 0.05 g ml$^{-1}$.

12. A frozen aerated product in a container according to any of claims 1 to 11 wherein the frozen aerated product contains freezing point depressants in an amount between 20% and 40% w/w, preferably above 25%, and between 0% and 15% fat, preferably between 2% and 12%, the freezing point depressants having a number average molecular weight $\langle M \rangle_n$ following the following condition:

$$\langle M \rangle_n =< (330 - 8 * FAT) \ g \ mol^{-1}$$

wherein FAT is the fat level in percent by weight of the product.

13. A frozen aerated product in a container according to any of claims 1 to 12 wherein the frozen aerated product contains a soluble gas in an amount between 0.1% w/w and 5% w/w, preferably between 0.3% and 2%.

14. A frozen aerated product in a container according to claim 13 wherein the soluble gas is nitrous oxide.

15. A frozen aerated product in a container, the container having at least two compartments (A) and (B), compartment (A) containing a propellant, compartment (B) containing the frozen aerated product and compartment (B) being provided with a valve;
**characterised in that** the compartments are gastightly separated from each other by the membrane of a bag and the container has a dispensing residue of less than 0.1 g ml$^{-1}$, preferably less than 0.05 g ml$^{-1}$.

Fig.1.

Fig.2.

Fig.3A.

Fig.3B.

Fig.3C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03033355 A

- US 5301838 A

**Non-patent literature cited in the description**

- *Journal of Food Engineering,* 1997, vol. 33, 221-226